# EUROPEAN PATENT APPLICATION

(11) **EP 0 674 196 A1**
(43) Date of publication of application: **27.09.1995**
(21) Application number: 95103869.4
(22) Date of filing: 16.03.1995
(51) Int. Cl.: G02B 6/38

(54) **Fibre optic connector**

(30) Priority: 22.03.1994 GB 9405576; 10.01.1995 GB 9500407
(71) Applicant: THE WHITAKER CORPORATION, Wilmington, Delaware 19808 (US)
(72) Inventor: Schreiter, Gerd, D-63785 Obernburg (DE); Reichel, Steffen, D-64646 Heppenheim (DE)
(74) Representative: Klunker . Schmitt-Nilson . Hirsch

(57) **Abstract**

A fibre optic connector (200) for transmissively coupling faces (254,262) of optical fibres (240,242), comprising a first plug housing (208) with a bore (238) for receiving one of the fibres (240) therein and a second plug housing (210) with a bore (238') for receiving the other optical fibre (242) characterized in that the first optical fibre (240) extends beyond a mating face (256) of the first plug housing (208) and the second optical fibre (242) is recessed from a mating face (260) of second plug housing (210) such that when mated, the first optical fibre (240) extends into the bore (238) of the second plug housing (210), thereby reducing the number of precision dimensions required in an optical connector.

## Description

This invention relates to fibre optic connectors used to optically couple a first optical fibre to a second optical fibre by positioning the faces thereof in close proximity to each other.

In conventional fibre optic connectors it is common to incorporate a high precision fibre optic ferrule to locate the fibres relative to each other. Typically, the optical fibre ferrule has a closely toleranced cylindrical outer surface, a closely toleranced, highly concentric bore and a transverse face. The optical fibre is positioned within the concentric bore such that the face of the fibre can be polished to lie within the transverse surface. As the bore is concentric with the cylindrical outer diameter, locating the outer diameter will also allow the location of the optical fibre within the ferrule. As mating optical fibres have their faces lying in planes that are common with the plane of the face of the ferrule, alignment of the mating cylindrical ferrules should allow the faces of the optical fibre to be positioned within the same plane. Due to the high precision required by these fibre optic ferrules, and the sleeves used to align them, this construction is relatively expensive.

In many applications it is desirable to have a connector that can be easily assembled in the field without the need for precision terminating and polishing tools. A connector of this type that is especially useful with plastic optical fibre is disclosed in International Patent Application Publication No. WO 92/14179. This connector incorporates a pre-positioned optical fibre with a pre-polished face in a fibre optic ferrule. The fibre to be connected is then abutted to the end of the fibre and held in place with a clip that can bias the fibre against the pre-positioned stub. However, this connector also incorporates the ferrule-type positioning as described above.

United States Patent 3,948,582 discloses an optical fibre connector comprising separately formed bodies, each of which have an axial bore in which an optical fibre is fitted. These bodies each have ends configured with respect to the configuration of the mating body, such as a flared socket and conical plug. As these ends connect, an optical fibre carried by one of the bodies is brought into abutment or close spacing with an optical fibre carried by the other one of the bodies. In an illustrated embodiment, an optical fibre extends from the face of a body having a conical plug of each of the connectors and are coupled within the bore of a sleeve having a flared socket. The locations of the end faces are such that when the plug of one of the connectors is seated within the socket, the end faces of the optical fibre are closely spaced apart or abutting.

This prior art connector, however, does not significantly reduce the precision requirements from those described above. In order to ensure the proper positioning of the end faces of the fibre when the plug is received within the socket, the distance the fibre faces extend from the plug and the length of the sleeve member along with the precision of the bore therethrough must be precisely controlled. The concentricities of the bore to the configuration on the end of the body also must be precisely controlled in order to ensure proper seating of the flared plug within the socket and the sleeve within the housing. Finally, the sizes and configuration of the flared socket and plug must be also precisely controlled so that the fibres are brought into proper position as the socket and plug interconnect.

In order to economically produce the high volume of connectors required for such applications as automotive systems, for example network systems where it is necessary to interconnect various components without the effects of electromagnetic interference, connectors that interconnect fibres in an economical manner are desired. This involves not only the reduction in precision dimensions within the connector itself, but allowing for the minimal amount of time being used to form the connection. In addition, the connector should be able to accommodate the dimensional changes of the fibre that result from the differing temperatures of the environment, as typically plastic fibre will be used.

What is needed is a fibre optic connector having the minimal precision dimensions incorporated therein, thereby enabling a minimum amount of specialized manufacturing techniques to be used.

It is an object of this invention to produce an improved fibre optic connector for transmissively coupling a face of a first optical fibre to a face of a second optical fibre or device.

This object is accomplished by having a first optical fibre disposed within a bore of a first plug with the face of the first optical fibre extending therefrom, while the second optical fibre is positioned within a bore of a second plug housing where the face of the second optical fibre is recessed within the bore. The first fibre being received within the bore of the second plug so that the fibre faces are maintained in sufficiently close proximity to each other to ensure proper coupling.

It is possible that one or the other or both fibres could be fixed within their respective bores or floatably mounted therein. It is also envisioned that one of the optical fibres could be replaced with an optical device, such as an emitter or receiver. This would be especially possible for the recessed end face.

An embodiment of the invention will now be described by way of example with reference to the accompanying drawings, in which;
Figure 1 is a cross-section of a fibre optic connector showing the optical fibres in a transmissively coupling relationship;
Figure 2 is a unmated cross-section of another embodiment of a fibre optic connector according to the present invention;
Figure 3 is a top view of a connector shell of the fibre optic connector of Figure 2;
Figure 4 is a side view of the connector shell of Figure 3; and,
Figure 5 is a mated cross-section of the fibre optic connector of Figure 2.

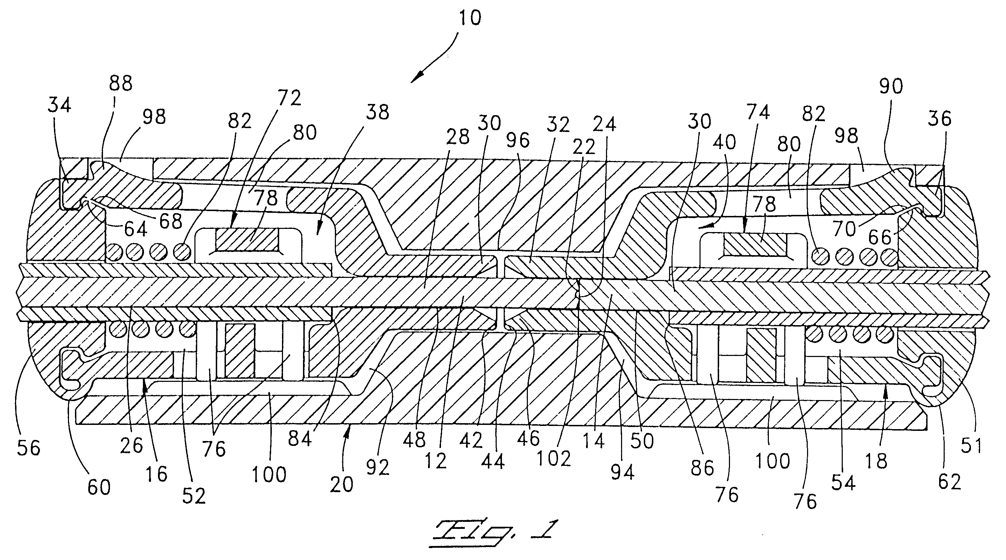

As seen in Figure 1, the fibre optic connector 10 includes a first fibre 12 and a second fibre 14 terminated within first and second housings 16 and 18. These fibres may be plastic. In this embodiment, first housing 16 and second housing 18 are identical, thereby further enhancing the low cost aspect of the present invention by allowing the economies of scale inherent in manufacturing twice as many of the same component compared to two different configurations. While this is an advantageous aspect of the present invention, the first and second housings do not have to be similarly configured and there may be applications where it would be advantageous to have different configurations for each of the housings, such as when mating to an electro-optic device. In order to orientate the first and second fibre 12, 14 the first housing 16, and the second housing 18 are positioned within coupler sleeve 20. Coupler sleeve 20 may also be of moulded plastic construction. Other means to couple the housings together may also be used including ones that are part of the housings themselves rather than distinct components as the illustrated coupler sleeve 20 represents.

The first optical fibre 12 and the second optical fibre 14 include a first end face 22 and a second end face 24 respectively. Each of the optical fibres 12, 14 are surrounded by a protective jacket 26. When the optical fibre 12, 14 is being prepared for termination within it's respective housing 16, 18, the protective jacket 26 is stripped therefrom. Optical fibre 12 has a first stripped portion 28 that is longer than the second stripped portion 30 of the second optical fibre 14, thereby assuring that the first end face 22 of the first fibre 12 extends from the first housing 16 while the second end face 24 of the second fibre 14 is recessed within second housing 18. A simple measuring device could be provided to assure the correct relationship is maintained. As will be described later, this relationship will not have to be maintained to a degree of high precision due to the float provided to one of the fibres.

Each of the housings 16, 18, respectively, include a front mating end 30, 32 and a fibre receiving end 34, 36 with a bore 38, 40 extending therebetween. The front mating ends 30, 32 of each of the housings 16, 18 include transverse faces 42, 44. The bores 38, 40 extend from these transverse faces 42, 44. The second housing 18 includes an angular lead-in 46 between the face 44 and the bore 40. While this lead-in 46 is shown with linear surfaces, it would also be possible to incorporate other shapes, such as a conical lead-in. The purpose of the lead-in 46 is to assure the first fibre 12 is received within the bore 40 where fibres 12, 14 are to be coupled. Each of the bores 38, 40 include an aligning portion 48, 50 where the optical fibre 12, 14 is received. Extending further along each bore 38, 40 is a cavity 52, 54 that is enclosed by a rear cap 56, 58. In this embodiment, the rear cap 56, 58 is interconnected with the housings 16, 18 by way of an integrally moulded strap 60, 62. The rear cap 56, 58 is press fit into the cavity 52, 54 where a barb 64, 66 on the cap 56, 58 is retained within a corresponding groove 68, 70 of the housings 16, 18.

When the optical fibre 12, 14 is inserted into the corresponding housings 16, 18 the fibre is retained therein by a clip 72, 74. These clips 72, 74 have two pairs of spaced apart legs 76. The legs 76 are spaced apart both longitudinally and transversely by a web 78 so that the legs of each pair will span the optical fibre 12, 14. When the clip 72, 74 is inserted within opening 80, and pressed down, the legs engage the jacket of the fibre 26, thereby capturing the fibre within the housing 16, 18. A biasing member 82, in this case a coil spring, is positioned between the clip 72, 74 and the rear cap 56, 58 to force the optical fibre 12, 14 forward until the jacket 26 at the corresponding stripped portion 28, 30 abuts the shoulders 84, 86. This configuration being more fully described in the International Patent Application No. WO 92/14179 that was published on August 20, 1992 and is hereby incorporated by reference. The housings 14, 16 further include retention tabs 88, 90 that are engageable with the coupler sleeve 20 to retain the housings 18, 20 in proper interconnection.

The coupler sleeve 20 is constructed to maintain proper positioning of the mating housings 16, 18 and the fibres therein 12, 14 to ensure transmissive coupling therebetween. The sleeve 20 includes cavities 92, 94 for receiving the housing bodies and an alignment bore 96 extending therebetween. The front mating end 30, 32 of each housings 16,18 is received within the alignment bore 96. Openings 98 receive the retention tabs 88, 90 so that the respective housings 16, 18 are retained in their proper position. Additionally, it is possible to incorporate keys 100 into the cavities 92, 94 to ensure proper orientation of the housings 16, 18 being inserted therein.

With the first and second optical fibres 12, 14 terminated to their desired lengths, by conventional methods such as scribe-and-break techniques, and the respective amounts of protective jackets 26 removed therefrom, the connector 10 is ready for assembly. This assembly will be generally described with reference to the first optical fibre 12 and the first housing 16. The first optical fibre 12 is inserted through the rear cap 56 where the biasing member 82 is placed thereupon. With the rear cap 56 closed and the first end face 22 of the fibre 12 extending the desired distance from the transverse face 42 of the first housing 16, there is no space between the protective jacket 26 and shoulder 84. The clip 72 is then pressed through opening 80 onto the jacket 26 of the first optical fibre 12 to captivate the fibre 12 within the housing 16. The fibre 12 has full float in the rearward direction so that the force exerted when the fibre abuts a mating surface, the other fibre 14 for example, does not result in damage to the optical face 22 and that any dimensional changes in the length of the fibre optic cable are accommodated while assuring the fibre 12 will be positioned to couple with the mating surface. The second optical fibre 14 is assembled into it's housing 18 in a similar manner with the end face 24 recessed from the transverse face 44 of the second housing 18 an amount smaller than the distance the first face 22 extends from the first housing 16, thereby establishing that end-to-end abutment will occur. A simple tool could be provided to assure this is accomplished with adequate accuracy as the longitudinal float will absorb minor inaccuracies.

With the first and second fibres 12, 14 assembled in their respective housings 16, 18, the fibre optic connector 10 is ready for assembly. The housings 16, 18 are inserted into the coupler sleeve 20 from opposite ends. The front mating ends 30, 32 are received within the alignment bore 96 and the first fibre 12 enters the lead-in portion 46 of the bore 40 of the second housing 18. Cavities 92, 94 and the alignment bore 96 of the coupler sleeve 20 are sized to receive the respective housings 16, 18 and generally position them within the coupler sleeve 20. Therefore, the lead-in portion 46 on the second housing 18 is sized to accommodate any misalignment between the first fibre 12 and the bore 40 of the second housing 18 so that the first fibre 12 will be received within the aligning portion 50 of the bore 40 in a close sliding fit, thereby assuring the alignment of the optical fibres 12, 14. As is readily recognized, it is the configuration and precision of this bore 40 that establishes proper alignment of the fibres 12, 14 without the need to locate the housings 16, 18 to the precision associated with other fibre optic connectors.

The housings 16, 18 are inserted into the coupler sleeve 20 until the retention tabs 88, 90 are received in openings 98 thereby retaining the housings within the sleeve. As the fibres 12, 14 are biased forward, the transverse faces 42, 44 of the housings 16, 18 do not necessarily have to come into contact with each other. The biasing members 82 urge the fibre faces 22, 24 into abutment or close proximity thereto and furthermore, when the fibres abut, act to control the amount of force exerted on the faces 22, 24. As these faces 42, 44 do not have to engage and the front mating ends 30, 32 of each housing do not need to be received in a tight fit within the alignment bore 96 of the coupler sleeve 20, the precision of these features can be greatly reduced. The sliding fit of the fibre 12 within the bore 40 is what assures proper alignment, while the spring biases the fibres into correct, longitudinal spacing. Therefore, a fibre optic connector having a minimal number of precision dimensioned features is derived.

Keys 100 can be incorporated into the coupler sleeve 20 to ensure proper orientation of the housings 16, 18 therein. In addition, while the configuration of the components described herein is generally cylindrical, other configurations may be desirable, including ones that incorporate keying into the selected shape of the housing or coupler sleeve themselves both to assure correct orientation during assembly and to prevent rotation thereafter. In addition, in order to ensure adequate coupling of signal between the end faces 22, 24 of the optical fibres 12, 14 an index matching material 102 can be inserted therein so that polishing of the end faces 22, 24 is unnecessary.

Advantageously, the fibre optic connector of the present invention minimizes the quantity at precision features required in a fibre optic connector to effectively couple mating optical fibres by receiving both fibres 12, 14 within a common bore 40 so that they are radially aligned and resiliently biased so that proper end face 22, 24 alignment is assured. In this connector, the primary precision feature required is the bore 40 where the fibres 12, 14 are received. The housings 16, 18 containing the fibres 12, 14 are only used to generally position the fibres 12, 14, as opposed to prior art connectors that position the fibre faces by accurately positioning some features of the housings relative to each other, thereby requiring additional features that must be of high precision dimensionally, concentrically and perpendicularly to the bores containing the fibres.

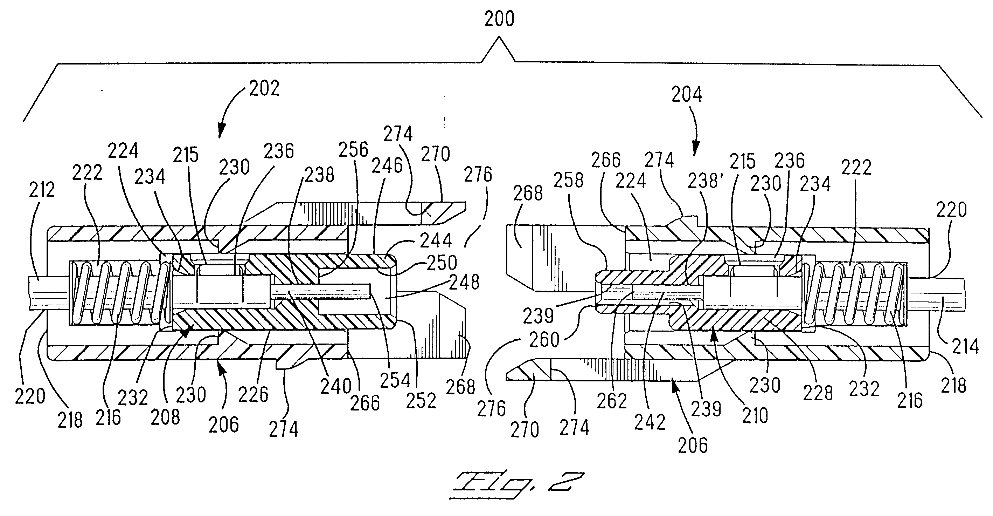

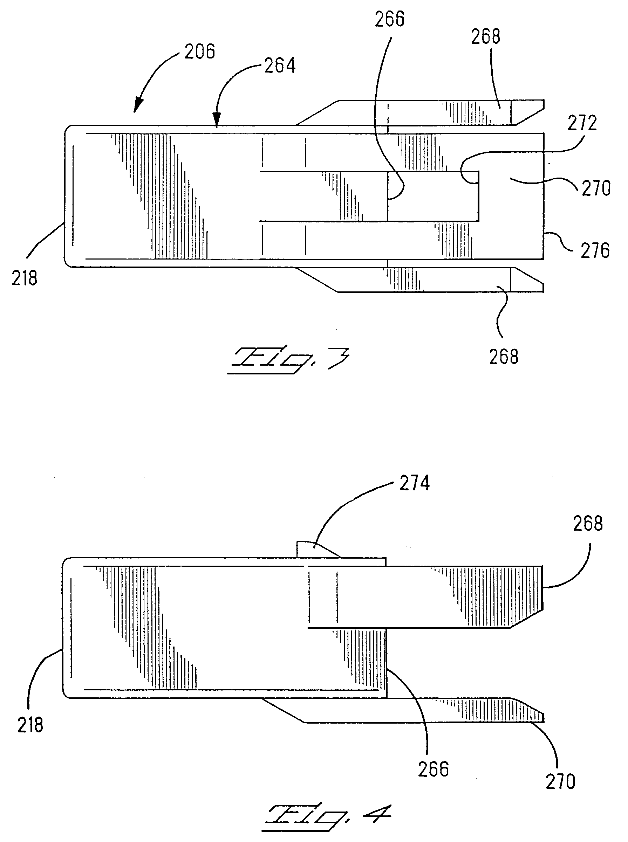

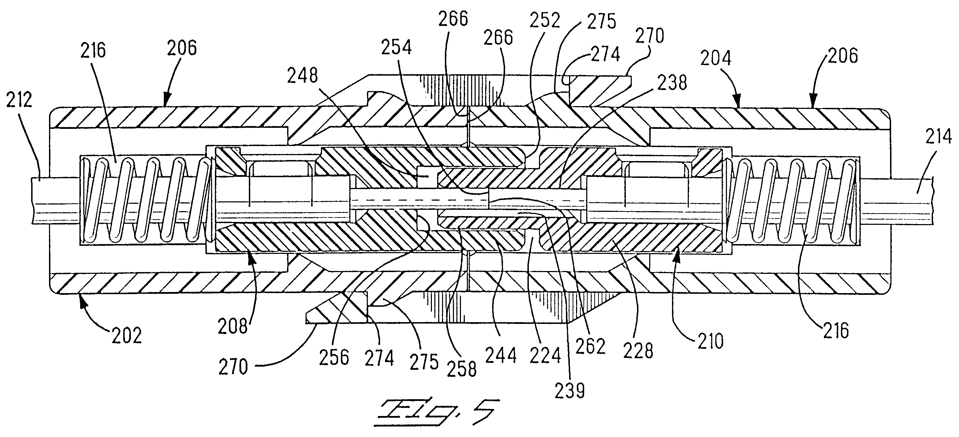

An alternative embodiment of the invention is shown in Figures 2, 5. With reference first to Figure 2, an optical fibre connector according to the present invention is shown generally at 200. The fibre optic interconnection comprises a first and a second connector half 202 and 204 respectively. In this embodiment, each of the connector halves 202,204 include an identical outer shell 206 which houses inner housings 208 and 210 respectively. Mating optical fibres 212 and 214 are terminated within their respective housings 208,210. The optical fibres 212,214 are retained within their respective housings 208,210 by a U-shaped clip 212 to assure that the optical fibres are maintained within their respective housings. A resilient member, in this case a coil spring 216, acts between the outer housing 206 and the inner housings 208,210.

Each outer shell 206 includes a fibre receiving end 218 which has a fibre entry 220 wherein the optical fibre passes through. Inward therefrom is a basically cylindrical seat 222 wherein the coil spring 216 is positioned. The seat 222 opens into a four-sided housing cavity 224 which receives the respective inner housing 208,210 therein. Advantageously, in this embodiment, the inner housing 208,210 includes respective body portions 226,228 which have a cross-section that is complementary to that of the housing receiving cavity 224. In this embodiment, this cross-section is basically rectangular. However, other cross-sections may be used. One advantage of non-circular cross-sections is that the inner housing is prevented from non-translational movement relative to the shell 206.

The inner housings 208,210 slide in their respective cavities 224 in a translational manner and are biased forward by the coil spring 216. Along the cavity 224, latches 230 are provided that interfere with the respective inner housing 208,210 in a manner that prevents the inner housing from being expelled from the outer shell 206 by the coil spring 216.

The body portions 226 and 228 of the first and second inner housings 208,210 each include a rear face 232 upon which the coil spring 216 acts. The optical fibres 212,214 extend through the coil spring 216 and into their respective housings 208,210 by way of a fibre passage 234 formed therein. A transverse opening 236 is formed in the housing body and is in communication with the fibre cavity 234. The transverse opening 236 accepts the clip 212 that engages the fibre. The clip 212 then retains the fibre with the respective housing. Forward of the transverse opening 236 there is a reduced diameter alignment portion 238, 238' wherein the optical fibre itself 240,242 is disposed. In this embodiment, the alignment portion 238 in inner housing 208 is a simple cylindrical barrel, while the alignment portion 238' of the inner housing 210 includes three guide ribs 239 forming a tri-lobed structure that is complementary to the optical fibre 242 where concave surfaces on each of the ribs cooperate to define the alignment portion 238' that corresponds to the outer surface of the fibre along three separated surfaces.

In the first inner housing 208 a shroud 244 extends outward from the body 226. The shroud has an outer configuration 246 that is an extension of the body 226. Furthermore, the shroud 244 defines an inner cavity 248 with a peripheral wall 250 thereabout. The shroud 246 extends forwardly to a face 252. The inner cavity 248 includes a base wall 256 from which a free end 254 of the optical fibre 240 extends into the cavity 248.

The second inner housing 210 includes a similarly configured body portion 228 that has a nose portion 258 extending therefrom. The alignment section 238 of the fibre cavity extends through the nose to an open mating face 260. Inward of the mating face 260, the end face 262 of the optical fibre 242 is positioned within the alignment portion 248. The cross-section of the nose 258 is basically complementary to the internal cavity 248 of the shroud of the first inner housing 208 and sized for a sliding fit therewith.

With reference now also to Figures 3 and 4, the outer configuration to shell 206 will be described in detail. In this embodiment, which is directed to a connector for a single optical fibre housing, the outer shell 206 includes a body portion 264 having a generally rectangular cross-section with an interior cavity formed as described above. The body portion 264 includes the fibre receiving end 218 and a fibre coupling end 266 opposite therefrom. Extending along opposing peripheral walls of the body 264 are a pair of guide arms 268. Located on one of the other walls of the body 264 is a latch arm 270 basically of U-shaped configuration defining an inner shoulder 272. Opposite the latch arm 270 is a locking lug 274. As the guide arms 268 and the latch arm 270 extend forward of the mating face 266, a complementary connector region 276 is thereby defined.

With reference once again to Figure 2, as the guide rails 268 do not span the central axis of the outer shell 206, it is possible to utilize the same outer shell 206 for each connector half 202,204 by positioning the outer shells 206 so that the latch arms 270 of each shell correspond to the lugs 274 of the opposing shell, the guide arms 268 will pass along each other and the other body 264 so that mating faces 266 are brought into close proximity to one another as best seen in Figure 5.

With further reference to Figure 5, the mating connector halves 202 and 204 are shown in their interconnected position. In this case the locking arms 270 of each of the outer shells 206 engage corresponding lugs 275 of the opposing shell and are retained therewith by interference with the abutment surface 274. In this position, as stated above, the mating faces 266 of each of the shells 206 are brought into close proximity of each other. In the interlocked position, the shroud 244 of the first inner housing 208 is received within the housing cavity 224 of the outer shell 206 of the second connector half 204. The nose portion 258 of the second inner housing 210 is received within the cavity 248 defined by the shroud 244. A portion of the optical fibre 240 that extends into the cavity 248 is received within the alignment portion 248 where its front face 254 abuts the front face 262 of the optical fibre 214 contained within the second connector half 204. The nose 258 of the second housing 210 does not abut the base 256 of the first inner housing 208 and the forward portion 252 of the shroud of the first inner housing 208 does not abut the body portion 228 of the second inner housing 210. The only abutment is occurring between the optical faces 254,262 and this abutment is maintained by way of the resilient forces exerted by the coil springs 216. In this embodiment, it was chosen to fix the fibres relative to the inner housings and then bias the entire inner housing forward. It may also be desirable to bias the fibres themselves forward. Finally, it would be a simple matter dimensioning to assure that the shroud 244 is received within the passage 224 of the mating shell 206 prior to entry of the nose 258 within the cavity 248 of the shroud which would occur prior to receiving the fibre 240 within the passage 238 of the second inner housing 210. This would assure smooth coupling of the connector halves. Other mating sequences may be desired and could easily be effected. Furthermore, while this embodiment is described with reference to a single interconnection, it would be possible to include multiple optical fibre interconnections therein.

Many modifications and variations may be made in the techniques and structures described and illustrated herein without departing from the spirit and scope of the present invention. Accordingly, it should be readily understood that the techniques and structures described and illustrated herein are illustrative only and are not to be considered as limitations upon the scope of the present invention.

## Claims

1. A fibre optic connector (10,200) for transmissively coupling a face (22,254) of a first optical fibre (28,240) to a face (24,262) of a second optical fibre (14,242), comprising a first plug (16,208) having a mating end (42,256) and a fibre receiving end (56,282) with a bore (48,238) extending therebetween, the first optical fibre (28,240) being disposed within said bore (48,238) with the face extending from the mating end (42,256); a second plug housing (18,210) having a mating end (44,260) and a fibre receiving end (56,232) with a bore (50,238) extending therebetween, the second optical fibre (14,242) being disposed within the bore (50,238); characterized in that the face (24,262) of the second fibre (14,242) is recessed within the corresponding bore (50,238) and the first fibre (28,240) extends into the bore (50,238) of the second plug housing (18,210) sufficiently to be in close proximity with the face (24,262) of the second fibre (14,242).

2. The fibre optic connector (10) of claim 1, further characterized in that at least one of the optical fibres (12) are in communication with a biasing member (82) forcing said fibre (12) towards the mating fibre (14).

3. The fibre optic connector (200) of claim 1, further characterized in that at least one of the optical fibres (240) are fixed to the respective housing (208) and the housing (208) is in communication with a biasing member (216) forcing the face (254) of the fibre (240) positioned therein into optical coupling with the mating face (262).

4. The fibre optic connector (10) of anyone of claims 1-3, further characterized in that the pair of plug housings (16,18) are received in an outer shell (20).

5. The fibre optic connector (200) of claim 4, further characterized in that the outer shell is of two piece construction with each housing (208,210) being received within a separate shell section (202,204).

6. The fibre optic connector (10) of claim 4, further characterized in that the outer shell (20) is a tubular sleeve having opposing cavities (92,94) extending from each end into which the first and second plug housings (16,18) are seated and includes a retention element (98) engageable by a locking element (88) in communication with the plug housing (16,18) to maintain position.

7. The fibre optic connector (10) of anyone of claims 1-4, further characterized in that the biasing member (82) within the corresponding housing (16,18) which acts between a clip (72,74) fixed to the optical fibre (12) and the corresponding housing (16,18) to force the fibre (12) towards the mating fibre (14).

8. The fibre optic connector (10) of anyone of claims 1-7, further characterized in that index matching gel (102) is disposed between the mating faces (22,24).

9. The fibre optic connector (200) of anyone of claims 1-3, further characterized in that the first housing (208) includes a shroud portion (246) defining a cavity (248) wherein the end face (254) of the first optical (240) fibre is disposed and the second housing (210) includes a nose portion (258) extending beyond the mating face (262) of the second optical fibre (242), where the nose portion (258) is receivable within the cavity (248) in a sliding fit.

10. The fibre optic connector (200) of anyone of claims 1-3, further characterized in that the first and second housings (208,210) are received in identical outer shells (206) and, when mated, a portion of the first housing (246) is received within the shell (206) of the shell of the second housing (210).

11. The fibre optic connector (200) of claim 10, further characterized in that the first and second housings (208,210) are slidably within their respective shells (206) and are biased by a spring member (216).

12. The fibre optic connector (200) of claim 10, further characterized in that each shell (206) has guide fingers (268) that cooperate with the mating shell (210) to for relative positioning and a latch (270) and a complementary locking lug (274) that cooperate with the complementary member (270,274) of the mating shell (210) to hold the fibre end faces (254,262) in the optically coupled orientation.
